# EUROPEAN PATENT SPECIFICATION

(11) **EP 0 916 047 B1**
(45) Date of publication and mention of the grant of the patent: **16.02.2000**
(21) Application number: 97933788.8
(22) Date of filing: 29.07.1997
(51) Int. Cl.: F16K 15/03, F16K 25/00

(54) **DUAL PLATE CHECK VALVE**
RÜCKSCHLAGVENTIL MIT DOPPELKLAPPEN
CLAPET DE NON RETOUR A DEUX PLAQUES

(30) Priority: 30.07.1996 GB 9616013
(43) Date of publication of application: 19.05.1999
(73) Proprietor: GOODWIN INTERNATIONAL LIMITED, Hanley Stoke-on-Trent ST1 3NR (GB)
(72) Inventor: BECKETT, Kim, Stuart, Staffordshire ST4 8QQ (GB)
(74) Representative: Webb, Andrew John
(86) International application number: GB9702045
(87) International publication number: WO9804857

(56) References cited:
- DE-B- 1 153 955
- FR-A- 2 583 131
- US-A- 4 599 278
- US-A- 4 809 741
- US-A- 5 392 810

## Description

This invention relates to dual plate check valves and to a manufacturing method.

Dual plate check valves are known which comprise an annular housing or valve body with two substantially semi-circular, or D-shaped valve members or plates pivotally mounted on a diametral hinge pin. The plates can be urged by reverse pressure towards a valve closed position in which they shut respective semi-circular or D-shaped apertures defined in the valve body by a diametral cross piece, thereby providing the function of a non-return valve. The plates can be urged by pressure of a given level on the upstream side of the valve towards an open position in which they are generally parallel to the valve body axis.

For certain applications it is known to provide the valve seat surrounding the apertures with a resilient material to act as a sealing member and improve the seal between the valve seat and the sealing surface of the valve plate. FR-A-2 583 131 which is considered to be the closert prior art for the independent claims 1, 15 and 24, discloses a dual plate check valve in which a synthetic rubber or teflon sealing member is provided in a groove on the sealing surface of each valve plate. However, for other applications such as at high or low temperatures or for handling corrosive fluids, no suitable seal materials are available. In these cases, it is necessary to provide a metal to metal seal between the valve seat and the valve plate. However, the sealing surfaces of the valve seat and the valve plate which move into and out of contact with each other are subject to wear or degradation due to corrosion or erosion so it is also known to provide the surfaces with an overlay of a material more durable than the metal of the valve body or the valve plate or with a corrosion resistant material. This overlay has been formed by welding an alloy surface to the respective sealing surfaces.

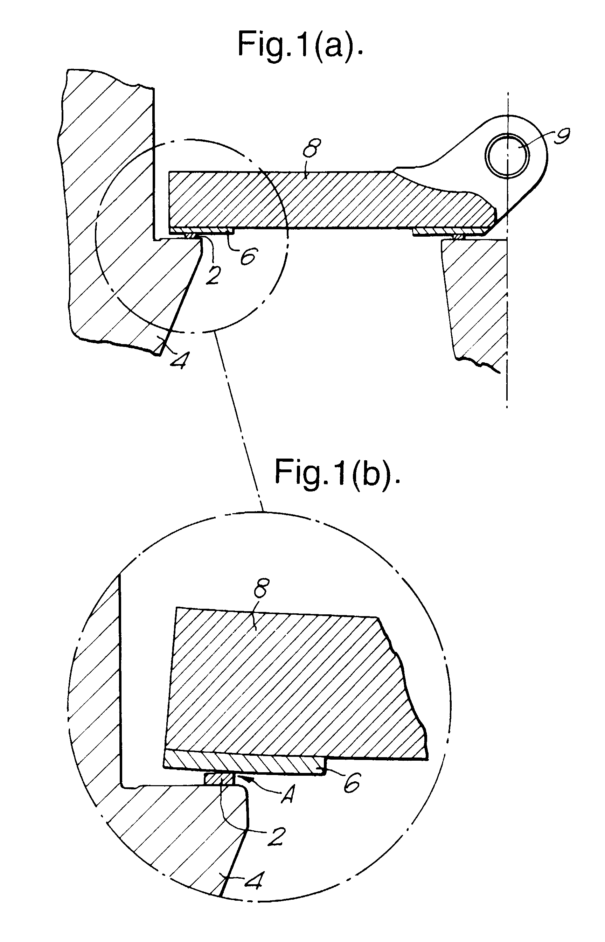

Figure 1(a) shows in cross-section a portion of a prior art check valve in the closed position with the raised weld overlay 2 provided on the valve seat 4 sealingly engaging the weld overlay 6 provided on the plate 8. When the plate 8 is subjected to high reverse pressure it suffers distortion, such as bowing of the plate, since it is only supported around its edges. This creates extreme local pressure on the edge of the weld bead with the seal tending towards a line seal. The greater the back pressure on the valve plate, the higher the stress on point "A" of the weld shown in Figure 1(b). These stresses are known as Hertzian stresses and cause degradation of the sealing surfaces. As a result of the necessary play within the hinge 9 to allow the heel of the plate to lift clear of the body prior to opening, such play also permitting sideways movement of the plate, the plate will sometimes reseat in the closed position on the sealing surfaces deformed by Hertzian stress, thus leading to leakage across the valve seal.

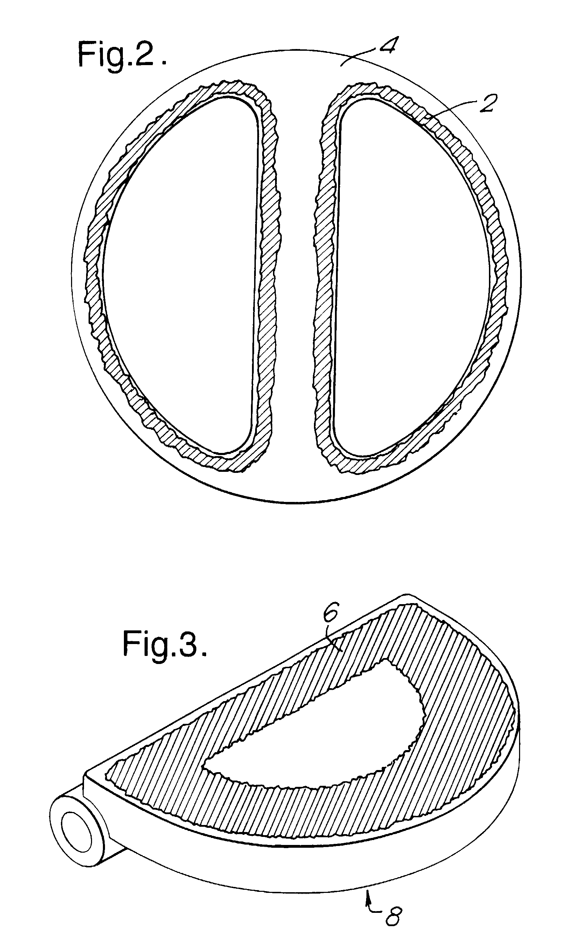

Deformation of the sealing surfaces is made even worse by the weld bead 2 on the valve seat 4 having a rippled edge as shown in Fig. 2 resulting from the manufacturing method described below. As shown in Figure 1(b) when reverse pressure is increased and the plate deforms, the seal between the sealing surfaces tends to become a line seal on the inner edge of the weld bead 2, which being irregular leads to leakage. Due to creation of local leakage paths the weld ripple also contributes to wire drawing on the seal contact faces.

A further problem with the above type of weld overlay results from the fact that at high or low temperatures, there can be differential thermal expansion/contraction between the weld metal and the underlying metal. In effect these metals form a bi-metallic strip and the differential expansion/contraction leads to distortion in the carefully machined, flat finish contributing to greater leakage. This can be a problem especially on the plate because of the larger quantity of weld overlay metal used to achieve the necessary depth right across the sealing face.

A conventional method for providing a weld overlay for dual plate check valves is as follows.

The valve seat is machined down to provide clearance for the thickness of the weld overlay which is to be applied. The valve seat surface is marked with punch marks or similar to identify the intended weld overlay area. The weld overlay is applied by forming three welds on the valve seat around the aperture to form a raised bead. Two lines of weld are run alongside each other and the third is located between and overlapping on top of the first two to give a bead of the necessary raised height. This bead is then machined down to form a sealing surface approximately 2 mm high above the seat surface and to remove any irregularities in height of the bead.

Further, the surface of each valve plate is machined back and an overlay of metal alloy welded across a large area of the plate to ensure that the overlay will contact the sealing surface of the valve seat the whole way around the aperture. This requires many weld runs. The overlay on the valve plate is then finish machined to give the required plate thickness.

It is necessary to pre-heat both the valve body and valve plates prior to welding, and post-weld heat treatment is also required. The plates require pressing to flatten them out as they suffer distortion during the repeated welding.

This prior method also suffers from the following limitations, described with reference to Figures 2 and 3. The weld overlay 2 is built up by hand on the surface of the valve seat 4 and the plate 8, therefore the edge of the weld is irregular or rippled as shown in Figures 2 and 3. Figure 3 also shows the large area of weld overlay 2 required on the valve plate 8. The welding process also creates spatter and burn-off adjacent to the weld thus degrading the surface of for example the valve seat. If the height of the weld is insufficient at any point following machining, the weld must be built up with a fresh weld and then re-machined.

It is an aim of this invention to reduce these disadvantages and problems.

According to the present invention there is provided a dual plate check valve comprising:
a substantially cylindrical valve body provided with a diametrical cross-member thereby defining a pair of substantially D-shaped apertures; and
two substantially D-shaped plates, pivotally connected by a hinge means parallel to said cross-member, and pivotable between a valve open position and a valve closed position in which a sealing face portion of each plate engages a sealing face portion provided on a valve seat which surrounds each aperture,
wherein the sealing face portions on each of the plates and/or on each of the valve seats has a groove filled with a weld inlay.

According to another aspect of the present invention there is provided a method of forming a valve sealing face portion of a sealing surface of the plates and/or valve seats of a dual plate check valve having a substantially cylindrical valve body provided with a diametrical cross-member thereby defining a pair of substantially D-shaped apertures, and two substantially D-shaped plates, pivotally connected by a hinge means parallel to said cross-member, and pivotable between a valve open position and a valve closed position in which the sealing face portion of each plate engages a sealing face portion provided on a valve seat which surrounds each aperture, the method including the steps of:
(a) providing a groove in the or each sealing surface;
(b) forming a weld inlay in said groove.

With this invention, the weld inlay can be applied in a single run or reduced number of runs simply by filling the groove without the need to repeatedly build up the weld material. This may reduce the requirement for pre- and post-weld heat treatment, and alleviate the need for pressing of a valve plate.

This invention is particularly advantageous for dual plate check valves in which the plates have raised reinforced central portions and non-reinforced portions adjacent to each end of the straight edge of the plate as this design is superior for maintaining a flat face to face seal between the weld inlay sealing portions.

A valve according to this invention can advantageously be used in high or low temperature fluid line assemblies with minimal or no leakage when the valve is closed. The weld inlay according to this invention can be much narrower than the prior weld overlay, therefore there is a considerably smaller metal surface area to suffer the distortion effects of differential thermal expansion/contraction. In the invention, the weld metal depth can be minimised without the risk of dilution and is able to taper off at the edges without the risk of cracking. Furthermore, by providing the weld inlay in a groove a shape is created which is less liable to distort under the differential expansion/contraction i.e. the valve body or plate metal has a larger surface area in contact with the weld relative to the width of the weld, and surrounds the weld such that the stresses caused by differential expansion/contraction can be withstood without the same extent of deformation of the sealing surface.

A specific embodiment of the invention will now be described by way of example only with reference to the accompanying drawings in which:
Figures 1(a) and (b) illustrate in cross-section a prior dual plate check valve seal;
Figure 2 shows a weld overlay provided on a valve seat according to a prior method;
Figure 3 shows a weld overlay provided on a valve plate according to a prior method;
Figure 4 shows an exploded view of a dual plate check valve of the type in which the present invention can be used;
Figure 5 is a plan view of an embodiment of the body of a valve according to the invention;
Figure 6 illustrates an embodiment of a valve plate for a valve according to the invention;
Figure 7 illustrates in cross-section an embodiment of a dual plate check valve according to the invention;
Figure 8(a) and (b) illustrate in cross-section an embodiment of a dual plate check valve according to the invention;
Figures 9 (a), (b) and (c) illustrate in cross-section and plain view a further embodiment of a dual plate check valve according to the invention; and
Figures 10 (a), (b), (c) and (d) show in section a first and a second embodiment of the stages of fabricating a weld inlay on a valve component according to the present invention.

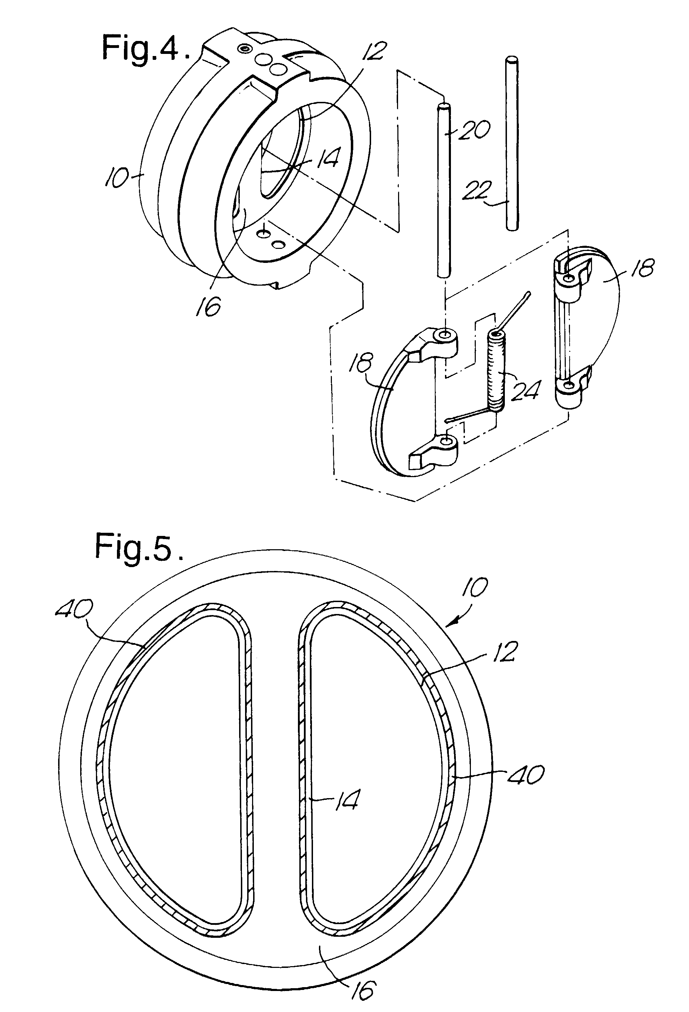

Figure 4 shows a dual plate check valve in which the invention can be used. The invention may be embodied in other types of dual plate check valve with metal to metal sealing surfaces.

Referring to Figure 4, the valve has an approximately cylindrical body 10 which has an axial bore through it for the passage of fluid. An annular portion 12 projects into the aperture from the inner wall of the valve body 10. A cross-member 14 extends diametrically across the valve body 10 and together with the annular projection 12 defines two D-shaped apertures. The annular projection 12 and the diametrical cross-member 14 comprise the valve seat 16 on which valve plates 18 rest when the valve is in a closed state. A D-shaped or generally semi-circular valve plate 18 is provided for each D-shaped aperture in the valve body 10.

Fluid may flow through the valve from an upstream side of the valve seat to a downstream side thereof. As shown in Figure 4, the two valve plates are located on the downstream side of the valve seat 16. The two plates 18 have lugs by which they are pivotally connected to a hinge pin 20 extending diametrally across the valve body 10 parallel to the cross-member 14. In the valve closed position, the two generally semi-circular or D-shaped plates 18 are pivoted around hinge pin 20 into sealing contact with the valve seat 16. A stop pin 22 extends diametrally across the valve body 10 parallel to and downstream of the hinge pin 20 to limit the degree of opening of the valve plates 18. Optionally a spring or springs 24 bias the dual valve plates 18 into sealing contact with the valve seat 16.

The hinge pin 20, stop pin 22 and plates 18 may be supported in the valve body 10 by means of a conventional retainer system (not shown), or by means of inserts as described in WO 95/27163.

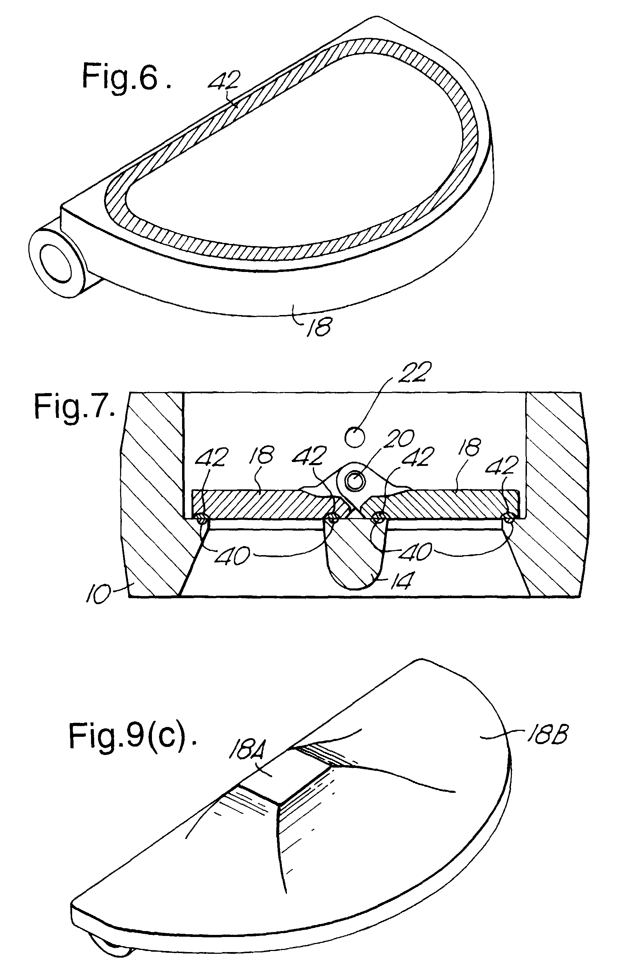

Figures 5 and 6 show a weld inlay 40 provided on the valve seat 16 of the valve body 10 and a weld inlay 42 provided on the sealing surface of a valve plate 18.

Figure 7 shows a valve of the invention with such inlays in axial cross section in a plane perpendicular to the cross-member 14 and hinge pin 20.

The weld inlays 40, 42 are each contained in a groove which in cross section has a arcuate or generally semi-circular profile which has been filled with the weld inlay material. The grooves may of course have different profiles such as rectangular, U-shaped, V-shaped or dovetail (i.e. with the width increasing with depth). The dimensions and shape of the groove may vary along the length of the groove. It may for example be advantageous to have a wider inlay portion at the centre of the curved portion of the D-shaped plate which is subjected to the greatest effect of back pressure acting on the plate in the valve closed position. As seen in Figs. 5 and 6 the edges of the inlays in the grooves do not suffer from weld ripple. The groove and inlay on the plate 18 are wider than those on the valve seat to allow for play within the hinge of the plate which will affect the precise position at which the plate seats in the valve closed position, but ensures that the inlays 40, 42 still contact each other to form a seal. Alternatively, the inlay on the valve seat could be wider than the inlay on the plate. Both the inlay 42 and inlay 40 can be much more accurately located by the method of the present invention, less allowance needs to be made than in the prior art valves where application of the weld beads by hand provided a further degree of uncertainty of location.

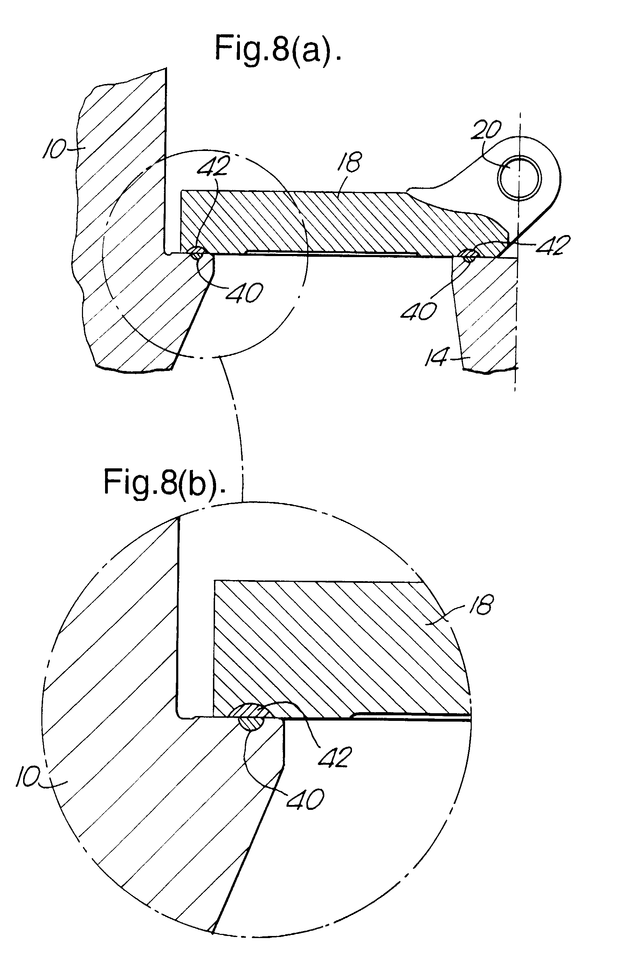

Figure 8(a) is a similar cross section to that of Figure 7 but showing only half a valve and one valve plate 18. The valve plate 18 in the embodiment shown in Figures 7 and 8 is a generally flat plate. Figure 8(b) shows in detail the seal formed between the valve plate 18 and the valve seat and in particular the weld inlays 42 and 40 respectively corresponding to those shown in Figures 7 and 8(a).

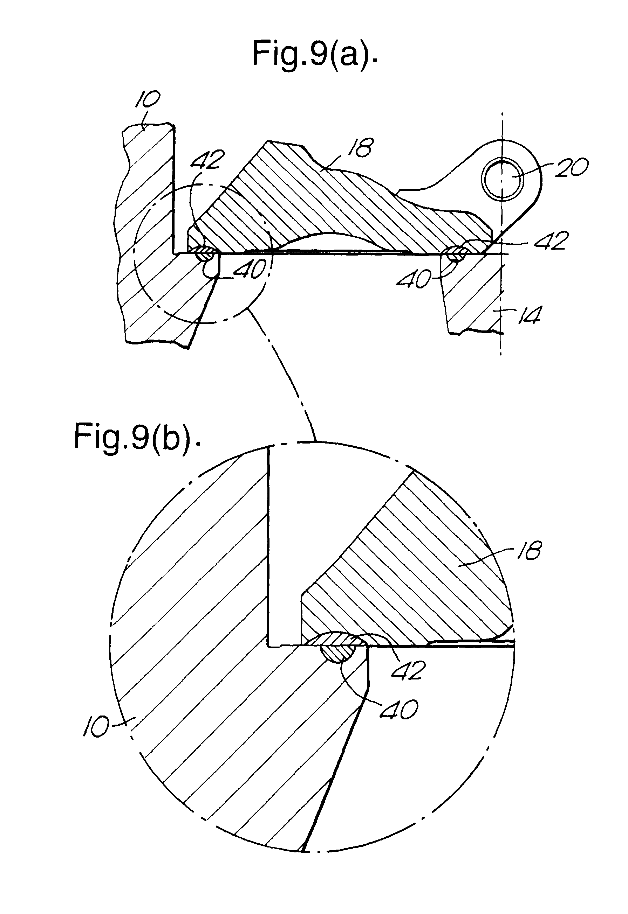

Figures 9(a) and (b) show a different preferred embodiment of the invention in views corresponding to Figures 8(a) and (b) with a further plain view 9(c) of the plate 18. The plates 18 in the embodiment shown in Figure 9 have raised reinforced central portions on the downstream side and recesses on the upstream side, in accordance with the teaching of WO 95/15455, the contents of which are hereby imported by reference. As disclosed in WO 95/15455 the use of a reinforced central portion 18A and non-reinforced portions 18B adjacent to each end of the straight edge of the plate 18 provides superior face to face sealing characteristics.

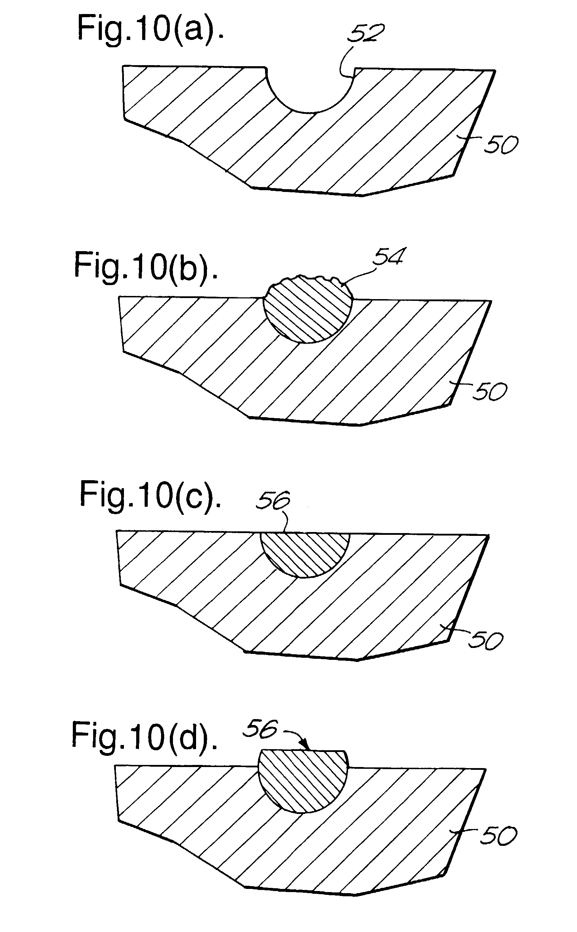

Figure 10 illustrates stages in a method according to the invention of making a weld inlay of a valve seal.

Figure 10(a) shows in section a portion of a valve component 50 which could be, for example, a valve seat or a valve plate, and in which a groove 52 has been formed. The groove 52 may be formed by milling or machining or may be formed when the valve component is cast or forged or by any other suitable process. In this embodiment the groove 52 has a generally semi-circular cross section and the depth of the groove is approximately 2 mm.

Figure 10(b) shows the groove after it has been filled with a weld inlay material 54 by a welding process. In this embodiment of the method, the groove is slightly over- filled and the material 54 protrudes above the surface of the valve component and surface tension forms a meniscus on the upper surface of the material. However, surface tension pulls the weld precisely to the edge of the groove. Forming the weld in the groove significantly reduces spatter and burn-off as the welding arc is located in the groove, and a better arc can be maintained.

The weld inlay is now finish machined to provide a flat sealing surface 56 generally level with the surface of the component 50, as illustrated in Figure 10(c). This provides a very accurate machine line edge to the weld inlay seal, as shown for example in Figure 4, with no edge ripple as the weld was formed in a precise groove.

Alternatively as shown in Figure 10(d) the weld inlay could be finish machined to be slightly proud of the surrounding surface or the adjacent metal on either or both sides could be machined away to leave the weld either slightly or very proud. The metal surrounding the weld can contribute to the seal, and by spreading the load, the Hertzian stress on the weld is relieved. Even if the weld is slightly proud, or is only flush on one side, the problem of Hertzian stress can still be alleviated.

Dual plate check valves are made in a wide range of sizes, consequently groove depths or weld inlay thicknesses may be as small as 0.01 mm or as large as 20 mm or more. A typical depth maybe upto 10 mm, for example 0.5 mm to 5 mm, particularly 1 mm to 3 mm. Normally the inlay will be at least as wide as it is deep, and it can with advantage be wider. Thus it may be as narrow as 0.01 mm and as wide as 20 mm or even more if it is wider than its depth. A typical width for a 2 inch (50 mm) valve might be 1 to 2 mm and for a 36 inch (900 mm) valve might be 5 to 15 mm, most typically about 10 mm. As described above, the inlay on the plate is advantageously wider than that on the valve seat (or vice versa) but not necessarily deeper. In this case the width might be say 1 mm to 20 mm typically.

Many different materials may be used for the weld inlay depending upon the application for which the valve is designed. The following are some examples:
Stellite (trademark), a cobalt, chromium, tungsten, molybdenum alloy which is hard wearing and desirable for use with abrasive fluids;
316 stainless steel for use with corrosive fluids;
410 stainless steel for use in applications subject to temperature erosion;
Monel (trademark), an alloy principally of nickel and copper, for use with acids; and
Inconel 625 (trademark), an alloy principally of nickel, chromium and iron that is resistant to corrosive fluids.

The illustrated embodiments show a weld inlay 40, 42 provided on both the valve seat and the valve plate. However, in certain circumstances, a valve inlay may be provided in one or the other valve component. Where inlays are provided on both seat and plate, they do not have to be both of the same weld inlay material. The inlay may be built up in layers of more than one material for example an Inconel layer and an outer Stellite layer, such as by filling a groove with a first inlay material and then forming a shallower groove in the first inlay material for filling with the second inlay material.

The use of a valve with weld inlays according to the present invention provides accurate metal to metal seals. Substantially zero or extremely low reverse leakage rates are obtainable even at elevated pressures making such valves suitable for use in high pressure fluid lines requiring valves of 300 class ANSI pressure rating (PN 50) or higher. Valves according to the present invention may be used in cryogenic (down to -196°C and below) and high temperature (up to 350°C and above) fluid line assemblies, in particular in applications where zero or extremely low leakage rates are required. This is because the present invention alleviates the problem of distortion of the sealing faces caused by differention thermal expansion/contraction of the weld metal relative to the surrounding metal.

## Claims

1. A dual plate check valve comprising:
a substantially cylindrical valve body (10) provided with a diametrical cross-member (14) thereby defining a pair of substantially D-shaped apertures; and
two substantially D-shaped plates (18), pivotally connected by a hinge means (20) parallel to said cross-member (14), and pivotable between a valve open position and a valve closed position in which a sealing face portion of each plate (18) engages a sealing face portion provided on a valve seat (16) which surrounds each aperture,
wherein the sealing face portions on each of the plates (18) and/or on each of the valve seats (16) has a groove (52) filled with a weld inlay (40,42).

2. A valve according to claim 1, wherein said weld inlay (40,42) is 1 mm to 15 mm wide.

3. A valve according to claim 1 or 2, wherein said weld inlay is 0.01 to 10 mm thick.

4. A valve according to claim 1, 2 or 3, wherein said weld inlay (40,42) is 0.5 mm to 5mm thick.

5. A valve according to claim 1, 2, 3 or 4 wherein said grooves (52) are substantially semi-circular, rectangular, U-shaped, V-shaped or dovetail in transverse cross-section.

6. A valve according to any one of the preceding claims, wherein each weld inlay (40,42) comprises Stellite, stainless steel, Monel or Inconel.

7. A valve according to any one of the preceding claims, provided with weld inlays (40,42) on both of the valve plates (18) and valve seats (16), the inlays (42) on the plates (18) being located so as to contact corresponding inlays (40) on the valve seats (16) when the valve is in the closed position.

8. A valve according to claim 7, wherein the inlays (42) on the plates (18) are wider than those (40) on the seats (16) (or vice versa).

9. A valve according to any one of the preceding claims, wherein each or at least one weld inlay (40,42) is finished flush with the respective adjacent body or plate face.

10. A valve according to any one of the preceding claims, wherein each or at least one weld inlay (40,42) is finished proud on one or both sides.

11. A valve according to any one of the preceding claims, including plates (18) comprising a reinforced central portion (18A) and non-reinforced portions (18B) adjacent to each end of the straight line of the D.

12. A high pressure fluid line assembly including at least one valve according to any one of claims 1 to 11.

13. A cryogenic fluid line assembly including at least one valve according to any one of claims 1 to 11.

14. A high temperature fluid line assembly including at least one valve according to any one of claims 1 to 11.

15. A method of forming a valve sealing face portion of a sealing surface of the plates (18) and/or valve seats (16) of a dual plate check valve having a substantially cylindrical valve body (10) provided with a diametrical cross-member (14) thereby defining a pair of substantially D-shaped apertures, and two substantially D-shaped plates (18), pivotally connected by a hinge means (20) parallel to said cross-member (14), and pivotable between a valve open position and a valve closed position in which the sealing face portion of each plate (18) engages a sealing face portion provided on a valve seat (16) which surrounds each aperture, the method including the steps of:
(a) providing a groove (52) in the or each sealing surface;
(b) forming a weld inlay (54) in said groove (52).

16. A method according to claim 15, wherein step (b) further comprises forming said inlay by welding so that the weld inlay protrudes above the top of the groove.

17. A method according to claim 15 or 16, further comprising the step of finishing the or each weld inlay flush with its respective sealing surface.

18. A method according to claim 15 or 16, further comprising the step of finishing the or each weld inlay proud on one or both sides.

19. A method according to any one of claims 15 to 18, wherein said groove (52) is 1 mm to 15 mm wide.

20. A method according to any one of claims 15 to 19, wherein said groove (52) is 0.5 mm to 5 mm deep.

21. A method according to any one of claims 15 to 20, wherein said groove (52) is substantially semicircular, rectangular, U-shaped, V-shaped or dovetail in transverse cross-section.

22. A method according to any one of claims 15 to 21, wherein said at least one valve component is cast or forged with an integral said groove.

23. A method according to any one of claims 15 to 22, wherein said weld inlay (54) comprises Stellite, stainless steel, Monel or Inconel.

24. A D-shaped valve plate (18) for a dual plate check valve comprising a sealing face portion for engaging an opposing sealing face portion provided on a valve seat (16), wherein said sealing face portion on the plate has a groove (52) filled with a weld inlay (42).

## Patentansprüche

1. Ein Doppelplatten-Rückschlagventil, aufweisend:
einen im wesentlichen zylindrischen Ventilkörper (10), der mit einem diametralen Querelement (14) versehen ist, um hierdurch ein Paar von im wesentlichen D-förmigen Öffnungen zu definieren; und
zwei im wesentlichen D-förmige Platten (18), die durch eine Gelenkeinrichtung (20), die parallel zu dem Querelement (14) ist, drehbar verbunden und zwischen einer Ventilöffnungsposition und einer Ventilschließposition drehbar sind, in welcher ein Dichtungsflächenbereich jeder Platte (18) mit einem Dichtungsflächenbereich in Eingriff kommt, der an einem Ventilsitz (16) vorgesehen ist, der jede Öffnung umgibt,
wobei die Dichtungsflächenbereiche an jeder der Platten (18) und/oder an jedem der Ventilsitze (16) eine Nut (52) aufweisen, die mit einer Schweißeinlage (40, 42) gefüllt ist.

2. Ein Ventil nach Anspruch 1, bei welchem die Schweißeinlage (40, 42) 1 mm bis 15 mm weit ist.

3. Ein Ventil nach Anspruch 1 oder 2, bei welchem die Schweißeinlage 0,01 bis 10 mm dick ist.

4. Ein Ventil nach Anspruch 1, 2 oder 3, bei welchem die Schweißeinlage (40, 42) 0,5 mm bis 5 mm dick ist.

5. Ein Ventil nach Anspruch 1, 2, 3 oder 4, bei welchem die Nuten (52) im Querschnitt im wesentlichen halbkreisförmig, rechteckförmig, U-förmig, V-förmig oder schwalbenschwanzförmig sind.

6. Ein Ventil nach einem der vorhergehenden Ansprüche, bei welchem jede Schweißeinlage (40, 42) Stellit, rostfreien Stahl, Monel oder Inconel aufweist.

7. Ein Ventil nach einem der vorhergehenden Ansprüche, das mit Schweißeinlagen (40 ,42) sowohl an den Ventilplatten (18) als auch an den Ventilsitzen (16) versehen ist, wobei die Einlagen (42) an den Platten (18) so angeordnet sind, daß sie entsprechende Einlagen (40) an den Ventilsitzen (16) berühren, wenn sich das Ventil in der geschlossenen Position befindet.

8. Ein Ventil nach Anspruch 7, bei welchem die Einlagen (42) an den Platten (18) weiter als diejenigen (40) an den Sitzen (16) (oder umgekehrt) sind.

9. Ein Ventil nach einem der vorhergehenden Ansprüche, bei welchem jede oder zumindest eine Schweißeinlage (40, 42) mit der jeweiligen benachbarten Körper- oder Plattenfläche auf gleicher Höhe fertigbearbeitet ist.

10. Ein Ventil nach einem der vorhergehenden Ansprüche, bei welchem jede oder zumindest eine Schweißeinlage (40, 42) an einer oder an beiden Seiten hervorstehend fertigbearbeitet ist.

11. Ein Ventil nach einem der vorhergehenden Ansprüche, welches Platten (18) enthält, welche einen verstärkten Zentralbereich (18A) und nicht-verstärkte Bereiche (18B) aufweisen, die jedem Ende der geraden Linie des D benachbart sind.

12. Eine Hochdruck-Fluidleitungsanordnung, welche wenigstens ein Ventil nach einem der Ansprüche 1 bis 11 aufweist.

13. Eine Tieftemperatur-Fluidleitungsanordnung, welche wenigstens ein Ventil nach einem der Ansprüche 1 bis 11 aufweist.

14. Eine Hochtemperatur-Fluidleitungsanordnung, welche wenigstens ein Ventil nach einem der Ansprüche 1 bis 11 aufweist.

15. Ein Verfahren zum Bilden eines Ventildichtungsflächenbereichs einer Dichtungsfläche der Platten (18) und/oder der Ventilsitze (16) eines Doppelplatten-Rückschlagventils mit einem im wesentlichen zylindrischen Ventilkörper (10), der mit einem diametralen Querelement (14), um hierdurch ein Paar von im wesentlichen D-förmigen Öffnungen zu definieren, und mit zwei im wesentlichen D-förmigen Platten (18) versehen ist, die durch eine Gelenkeinrichtung (20), die zu dem Querelement (14) parallel ist, drehbar verbunden und zwischen einer Ventilöffnungsposition und einer Ventilschließposition drehbar sind, in welcher der Dichtungsflächenbereich jeder Platte (18) mit einem Dichtungsflächenbereich in Eingriff kommt, der an einem Ventilsitz (16) vorgesehen ist, welcher jede Öffnung umgibt, wobei das Verfahren die folgenden Schritte aufweist:
(a) Vorsehen einer Nut (52) in der oder in jeder Dichtungsfläche;
(b) Bilden einer Schweißeinlage (54) in jeder Nut (52).

16. Ein Verfahren nach Anspruch 15, bei welchem der Schritt (b) weiterhin das Bilden der Einlage durch Schweißen in der Weise aufweist, daß die Schweißeinlage oberhalb der Oberseite der Nut hervorsteht.

17. Ein Verfahren nach Anspruch 15 oder 16, weiterhin den Schritt des Fertigbearbeitens der oder jeder Schweißeinlage auf gleicher Höhe mit ihrer entsprechenden Dichtungsfläche aufweisend.

18. Ein Verfahren nach Anspruch 15 oder 16, weiterhin den Schritt des Fertigbearbeitens der oder jeder Schweißeinlage hervorstehend an einer oder beiden Seiten aufweisend.

19. Ein Verfahren nach einem der Ansprüche 15 bis 18, bei welchem die Nut (52) 1 mm bis 15 mm weit ist.

20. Ein Verfahren nach einem der Ansprüche 15 bis 19, bei welchem die Nut (52) 0,5 mm bis 5 mm tief ist.

21. Ein Verfahren nach einem der Ansprüche 15 bis 20, bei welchem die Nut (52) im Querschnitt im wesentlichen halbkreisförmig, rechteckförmig, U-förmig, V-förmig oder schwalbenschwanzförmig ist.

22. Ein Verfahren nach einem der Ansprüche 15 bis 21, bei welchem die wenigstens eine Ventilkomponente einstückig mit der Nut gegossen oder geschmiedet wird.

23. Ein Verfahren nach einem der Ansprüche 15 bis 22, bei welchem die Schweißeinlage (54) Stellit, rostfreien Stahl, Monel oder Inconel aufweist.

24. Eine D-förmige Ventilplatte (18) für ein Doppelplatten-Rückschlagventil, einen Dichtflächenbereich aufweisend, um an einem gegenüberliegenden Dichtflächenbereich anzugreifen, der an einem Ventilsitz (16) vorgesehen ist, wobei der Dichtflächenbereich an der Platte eine Nut (52) aufweist, die mit einer Schweißeinlage (42) gefüllt ist.

## Revendications

1. Clapet anti-retour à deux plaques comprenant :
- un corps de clapet sensiblement cylindrique (10) pourvu d'une entretoise diamétrale (14) définissant ainsi deux ouvertures sensiblement en forme de D ; et
- deux plaques sensiblement en forme de D (18), montées, pivotantes, sur ladite entretoise (14) au moyen d'une articulation à charnière (20) parallèle à cette entretoise (14), et pouvant pivoter entre une position ouverte du clapet et une position fermée du clapet dans laquelle une portion de face d'étanchéité de chaque plaque (18) coopère avec une portion de face d'étanchéité ménagée sur un siège de clapet (16) qui entoure chaque ouverture,
dans lequel la portion de face d'étanchéité sur chacune des plaques (18) et/ou sur chacun des sièges de clapet (16) comporte une gorge (52) remplie d'un cordon de soudure incrusté (40, 42).

2. Clapet selon la revendication 1, dans lequel ledit cordon de soudure incrusté (40, 42) a 1 mm à 15 mm de largeur.

3. Clapet selon la revendication 1 ou la revendication 2, dans lequel ledit cordon de soudure incrusté a 0,01 à 10 mm d'épaisseur.

4. Clapet selon l'une des revendications 1, 2 ou 3, dans lequel ledit cordon de soudure incrusté (40, 42) a 0,5 mm à 5 mm d'épaisseur.

5. Clapet selon l'une des revendications 1, 2, 3 ou 4, dans lequel la section transversale desdites gorges (52) a une forme sensiblement semi-circulaire, rectangulaire, en U, en V ou en queue d'aronde.

6. Clapet selon l'une des revendications précédentes, dans lequel chaque cordon de soudure incrusté (40, 42) comprend de la Stellite, de l'acier inoxydable, du Monel ou de l'Inconel.

7. Clapet selon l'une des revendications précédentes, muni de cordons de soudure incrustés (40, 42) à la fois sur les deux plaques de clapet (18) et sur les deux sièges de clapet (16), les cordons incrustés (42) sur les plaques (18) étant disposés de façon à être en contact avec les cordons incrustés correspondants (40) sur les sièges de clapet (16) lorsque le clapet est dans la position fermée.

8. Clapet selon la revendication 7, dans lequel les cordons incrustés (42) sur les plaques (18) sont plus larges que ceux (40) sur les sièges (16) (ou vice versa).

9. Clapet selon l'une des revendications précédentes, dans lequel chaque ou au moins un cordon de soudure incrusté (40, 42) est dressé affleurant à la face adjacente respective du corps ou de la plaque.

10. Clapet selon l'une des revendications précédentes, dans lequel chaque ou au moins un cordon de soudure incrusté (40, 42) est dressé dépassant sur un côté ou sur les deux.

11. Clapet selon l'une des revendications précédentes, dont les plaques (18) comprennent une portion centrale renforcée (18A) et des portions non renforcées (18B) adjacentes à chaque extrémité de la ligne droite du D.

12. Ensemble de canalisations pour fluide à haute pression comprenant au moins un clapet selon l'une des revendications 1 à 11.

13. Ensemble de canalisations pour fluide cryogénique comprenant au moins un clapet selon l'une des revendications 1 à 11.

14. Ensemble de canalisations pour fluide à haute température comprenant au moins un clapet selon l'une des revendications 1 à 11.

15. Procédé pour former une portion de face d'étanchéité de clapet d'une surface d'étanchéité des plaques (18) et/ou des sièges de clapet (16) d'un clapet anti-retour à deux plaques ayant un corps de clapet sensiblement cylindrique (10) pourvu d'une entretoise diamétrale (14) définissant ainsi deux ouvertures sensiblement en forme de D, et deux plaques sensiblement en forme de D (18), montées, pivotantes, sur ladite entretoise (14) au moyen d'une articulation à charnière (20) parallèle à cette entretoise (14), et pouvant pivoter entre une position ouverte du clapet et une position fermée du clapet dans laquelle la portion de face d'étanchéité de chaque plaque (18) coopère avec une portion de face d'étanchéité ménagée sur un siège de clapet (16) qui entoure chaque ouverture, le procédé comprenant les étapes suivantes :
(a) procurer une gorge (52) dans la ou chaque surface d'étanchéité ;
(b) former un cordon de soudure incrusté (54) dans ladite gorge (52).

16. Procédé selon la revendication 15, dans lequel l'étape (b) comprend en outre la formation dudit cordon incrusté par soudage de façon que le cordon de soudure incrusté dépasse au-dessus du sommet de la gorge.

17. Procédé selon la revendication 15 ou la revendication 16, comprenant en outre l'étape dans laquelle on dresse le ou chaque cordon de soudure incrusté pour qu'il affleure sa surface d'étanchéité respective.

18. Procédé selon la revendication 15 ou la revendication 16, comprenant en outre l'étape dans laquelle on dresse le ou chaque cordon de soudure incrusté pour qu'il dépasse sur un côté ou les deux.

19. Procédé selon l'une des revendications 15 à 18, dans lequel ladite gorge (52) a 1 mm à 15 mm de largeur.

20. Procédé selon l'une des revendications 15 à 19, dans lequel ladite gorge (52) a 0,5 mm à 5 mm de profondeur.

21. Procédé selon l'une des revendications 15 à 20, dans lequel ladite section transversale de ladite gorge (52) a une forme sensiblement servi-circulaire, rectangulaire, en U, en V ou en queue d'aronde.

22. Procédé selon l'une des revendications 15 à 21, dans lequel au moins un composant du clapet est coulé ou forgé avec ladite gorge monobloc.

23. Procédé selon l'une des revendications 15 à 22, dans lequel ledit cordon de soudure incrusté (54) comprend de la Stellite, de l'acier inoxydable, du Monel ou de l'Inconel.

24. Plaque de clapet en forme de D (18) pour un clapet anti-retour à deux plaques, comprenant une portion de face d'étanchéité pour coopérer avec une portion de face d'étanchéité en vis-à-vis, ménagée sur un siège de clapet (16), dans laquelle ladite portion de face d'étanchéité sur la plaque a une gorge (52) remplie d'un cordon de soudure incrusté (42).
